# EUROPEAN PATENT SPECIFICATION

(11) **EP 2 628 841 B1**
(45) Date of publication and mention of the grant of the patent: **19.04.2017**
(21) Application number: 13155410.7
(22) Date of filing: 15.02.2013
(51) Int. Cl.: D06F 39/00

(54) **METHOD AND DEVICE FOR QUICKLY TURNING ON AND ACTIVATING A HOUSEHOLD APPLIANCE BELONGING TO THE WHITE GOOD CATEGORY**
VERFAHREN UND VORRICHTUNG ZUM SCHNELLEN ANSCHALTEN UND AKTIVIEREN EINES HAUSHALTSGERÄTS AUS DER KATEGORIE DER WEISSEN WAREN
PROCÉDÉ ET DISPOSITIF PERMETTANT DE RAPIDEMENT ALLUMER ET ACTIVER UN APPAREIL MÉNAGER APPARTENANT À LA CATÉGORIE ÉLECTROMÉNAGER BLANC

(30) Priority: 20.02.2012 IT TO20120147
(43) Date of publication of application: 21.08.2013
(73) Proprietor: Whirlpool EMEA S.p.A, 20016 Pero (MI) (IT)
(72) Inventor: Rossetti, Gioia, 60044 Fabriano (AN) (IT)
(74) Representative: Guerci, Alessandro

(56) References cited:
- EP-A1- 0 727 627
- WO-A1-2006/087735
- US-A1- 2002 078 511

## Description

### [TECHNICAL FIELD]

The present invention relates to the field of household appliances belonging to the white good category, particularly to a method and a device for quickly turning on and activating a household appliance belonging to the white good category.

### [PRIOR ART]

The recent developments and lower costs of electronic components, along with the need for offering increasingly innovative products to customers, have led to the development of more and more sophisticated household appliances (e.g. washing machines, refrigerators, dishwashers).

Such appliances are generally identified as "household appliances belonging to the white good category", and are adapted to perform different functions replacing or assisting human activities.

The sophistication of these appliances, while bringing about significantly improved functions, has however made them more difficult to use, since the user is required to carry out complex learning exercises for selecting and using such functions.

Even start procedures have become complex, e.g. because it is necessary to coordinate the sequence of actions to be carried out in order to activate the desired functions. In a washing machine, for example, the start procedure requires that the user presses an ON/OFF key or button to turn on the machine, then operates a knob for selecting the desired wash program, and finally presses a START key or button to actually start the wash program.

There is therefore a need for facilitating the use of said appliances, especially during the starting stages.

Document US2002/0078511A1 discloses a system for operating and programming a laundry appliance, the system including a series of menu screens that improve the flexibility of the interactions between the user and the appliance.

Document EP0727627A1 discloses a cooling appliance and its control method. The cooling appliance comprises a manually controllable mains switch connected into the electrical supply current circuit. The mains switch is switched off with delay after a manually released start of a time delay device if the starting condition is maintained beyond a preset time delay value and is switched on selectively without delay.

### [OBJECTS AND BRIEF DESCRIPTION OF THE INVENTION]

It is one object of the present invention to overcome the above-described drawbacks of the prior art.

In particular, it is one object of the present invention to improve the flexibility of use of a household appliance, thus making it simpler and easier to use.

According to one aspect of the present invention, the white household appliance has a quick start button which, when activated with the appliance off, allows the appliance to start different initial functions, such as turning on the appliance and selecting and activating a predefined work program, which was preset when manufacturing the appliance or stored beforehand by the user. Alternatively, it is also conceivable that pressing said key will cause the selection of the last program executed before the appliance was turned off.

These and other objects of the present invention are achieved through a method and a device for quickly turning on and activating a household appliance belonging to the white good category incorporating the features set out in the appended claims, which are intended to be an integral part of the present description.

### [BRIEF DESCRIPTION OF THE DRAWINGS]

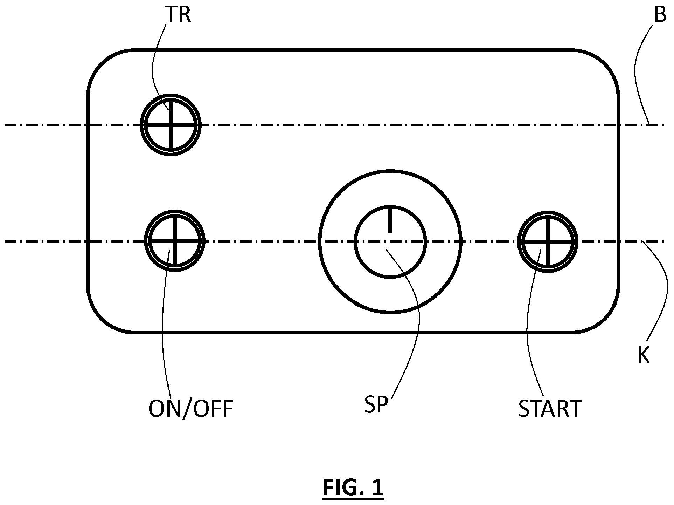

Some preferred and advantageous examples of embodiment will now be described by way of non-limiting example with reference to the annexed Figure 1, which shows a control panel of the household appliance in accordance with the invention.

### [DETAILED DESCRIPTION OF THE INVENTION]

According to one aspect of the present invention, the white household appliance has a button, referred to as quick start button, which, when activated with the appliance off, allows the appliance to start different initial functions, such as turning on the appliance and selecting and activating a predefined work program, which was preset when manufacturing the appliance or stored beforehand by the user. Alternatively, it is also conceivable that pressing said key will cause the selection of the last program executed before the appliance was turned off.

If said white household appliance is, for example, a washing or washing/drying machine, then said work program is a wash program.

For example, a particular program that is going to be used more frequently may be preset at the factory, e.g. a cotton wash program at 30°C followed by a spin cycle at 800 rpm, which can then be activated by means of said quick start button.

With reference to Figure 1, the quick start button TR is preferably located on the control panel of the appliance, near the ON/OFF button for normally turning on/off the appliance. The control panel also includes a START button for normally starting a work program selected by the user through program selection means, e.g. comprising an SP knob, or one or more buttons having the same function. The quick start button TR may be of the mechanical or touch type, and may be backlit, for example, by a LED: if it is on, it means that the button is usable, whereas if it is off, it means that the button is not usable; there may be an identification icon on it, and it may be concave inwards to guide the user's finger and facilitate the selection.

Let us assume that there are a first imaginary horizontal straight line B and a second imaginary horizontal straight line K, both lying on the control panel and appropriately spaced from each other, e.g. by at least 50 millimetres. Preferably, the first imaginary horizontal straight line B intersects only the quick start button TR, while the second imaginary horizontal straight line K intersects the ON/OFF button for normally turning on/off the appliance, the START button for normally starting a work program, and the SP knob for program selection. In this manner, the user is given a visual indication about the fact that the TR button must be used alone and the ON/OFF button must be used in combination with the START button and the SP knob.

The method for quickly starting and activating the white household appliance according to the invention comprises the following steps, which are activated by only pressing the quick start button with the appliance off:
- turning on the appliance;
- activating a predefined work program.

Preferably, a preliminary step is included for choosing said predefined work program, which may consist of the following alternative steps:
- presetting said program when manufacturing the appliance; or
- storing the program just executed by the appliance when turning it off, and activating said program when the quick start button is pressed again; or
- storing the total number of occurrences for each program executed by the appliance, determining which program had the largest number of occurrences when turning off the appliance, and activating said program when the quick start button is pressed again; or
- presetting said program according to the user's choice.

If it is chosen to preset said program according to the user's choice, the choice may be made, for example through the following step:
- with the appliance turned on by using the normal procedure, holding the quick start button TR pressed for a predefined time (e.g. 10 seconds), so as to associate with the quick start button TR the program selected through the selection knob while holding the button.

Preferably, procedures for checking the proper operation of the appliance are included, such as the following:
- if the user first presses the ON/OFF button and then operates the program selection knob (or any other equivalent program selector of the appliance), then the quick start button cannot be used because the user's specific choice will override the quick start button. Optionally, if the quick start button is backlit, in this situation it will go off to indicate that it is not available;
- if the user only presses the ON/OFF button, then the quick start button can be operated in order to select the predefined program.

Preferably, after a predetermined time has elapsed (e.g. 30 minutes) since the end of the work program, the appliance will automatically enter into a stand-by state, thus being ready for the next actuation of the quick start button as previously described.

The device of the invention therefore includes, in addition to the quick start button, means adapted for implementing the above-described steps of the method. The man skilled in the art will be able to provide suitable hardware and software means for manufacturing the device.

The invention, described herein with reference to a washing or washing/drying machine, is also applicable to other types of white household appliances, e.g. a clothes dryer, a dishwasher or an oven.

The above-described embodiment example may be subject to variations without departing from the protection scope of the present invention, including all equivalent designs known to a man skilled in the art.

The advantages deriving from the application of the present invention are apparent, and essentially consist in the appliance being simpler and easier to use.

In particular, the present invention allows a skilled person to reliably delegate to another, less skilled, person the activation the household appliance.

From the above description, those skilled in the art will be able to produce the object of the invention without introducing any further construction details.

## Claims

1. A method for quickly turning on and activating a household appliance belonging to the white good category, said household appliance belonging to the white good category being a washing machine or a washing/drying machine or a dishwasher or an oven, **characterized by** comprising the steps of:
- providing a quick start button (TR) on the appliance, said quick start button (TR), when activated with the appliance off, allowing the appliance to start different initial functions, such as turning on the appliance and selecting and activating a predefined work program;
- pressing only said quick start button (TR) to turn on the appliance and activate a predefined work program,
wherein said white household appliance belonging to the white good category comprises a button (ON/OFF) for normally turning on/off the appliance and means (SP) for selecting a work program, said method comprising the step of deactivating said quick start button (TR) upon operating said normal on/off button (ON/OFF) and said means (SP) for selecting a work program.

2. A method according to claim 1, wherein said predefined work program is determined in accordance with one of the following steps:
- presetting said predefined work program when manufacturing the white household appliance; or
- storing a work program executed by the white household appliance when turning it off, and activating said program as a predefined work program when said quick start button is pressed again; or
- storing the total number of occurrences for each program executed by the appliance, determining which program had the largest number of occurrences when turning off the appliance, and activating said program when the quick start button is pressed again; or
- presetting said program according to the user's choice.

3. A method according to claim 2, wherein, if said predefined work program is determined by the user's choice, said determination occurs with the appliance on by holding said quick start button (TR) pressed for a predefined time, so that the program being executed while holding the button will be associated with said quick start button (TR).

4. A household appliance belonging to the white good category, said household appliance belonging to the white good category being a washing machine or a washing/drying machine or a dishwasher or an oven and comprising a quick start button (TR), a button (ON/OFF) for normally turning on/off the appliance, means (SP) for selecting a work program and means for implementing the method according to any previous claim.

5. A household appliance belonging to the white good category according to claim 4, wherein said button (ON/OFF) for normally turning on/off the appliance and said means (SP) for selecting a work program are arranged on said appliance along a first horizontal straight line (K), and said quick start button (TR) is arranged on said appliance at a certain distance from said first horizontal straight line.

6. A household appliance belonging to the white good category according to claims 4 or 5, wherein said quick start button (TR) comprises one or more of the following features:
- it is of the mechanical or touch type;
- it is backlit;
- there is an identification icon on it;
- it is concave inwards.

## Patentansprüche

1. Verfahren zum schnellen Einschalten und Aktivieren eines Haushaltsgeräts, das zur Kategorie der weißen Ware gehört, wobei das Haushaltsgerät, das zur Kategorie der weißen Ware gehört, eine Waschmaschine oder eine Wasch-/Trockenmaschine oder ein Geschirrspüler oder ein Ofen ist, **dadurch gekennzeichnet, dass** es folgende Schritte umfasst:
- Bereitstellen einer Schnellstarttaste (TR) auf dem Gerät, wobei die Schnellstarttaste (TR), bei Aktivierung, wenn das Gerät aus ist, dem Gerät ermöglicht, unterschiedliche Anfangsfunktionen zu starten, wie etwa Einschalten des Geräts und Auswählen und Aktivieren eines voreingestellten Betriebsprogramms;
- Drücken ausschließlich der Schnellstarttaste (TR), um das Gerät einzuschalten und ein voreingestelltes Betriebsprogramm zu aktivieren,
wobei das weiße Haushaltsgerät, das zur Kategorie der weißen Ware gehört, eine Taste (ON/OFF) zum normalen Ein-/Ausschalten der Geräts und Mittel (SP) zum Auswählen eines Betriebsprogramms umfasst, wobei das Verfahren den Schritt des Deaktivierens der Schnellstarttaste (TR) bei Betätigen der normalen Ein-/Aus-Taste (ON/OFF) und der Mittel (SP) zum Auswählen eines Betriebsprogramms umfasst.

2. Verfahren nach Anspruch 1, wobei das voreingestellte Betriebsprogramm gemäß einem der folgenden Schritte bestimmt wird:
- Voreinstellen des voreingestellten Betriebsprogramms bei der Herstellung des weißen Haushaltsgeräts; oder
- Speichern eines Betriebsprogramms, das durch das weiße Haushaltsgerät ausgeführt wird, wenn es ausgeschaltet wird, und Aktivieren des Programms als ein voreingestelltes Betriebsprogramm, wenn die Schnellstarttaste erneut gedrückt wird; oder
- Speichern der insgesamt aufgetretenen Anzahl für jedes Programm, das durch das Gerät ausgeführt wird, Bestimmen, welches Programm am häufigsten aufgetreten ist, wenn das Gerät ausgeschaltet wird, und Aktivieren des Programms, wenn die Schnellstarttaste erneut gedrückt wird; oder
- Voreinstellen des Programms gemäß einer Auswahl des Benutzers.

3. Verfahren nach Anspruch 2, wobei, wenn das voreingestellte Betriebsprogramm durch eine Auswahl des Benutzers bestimmt wird, die Bestimmung bei eingeschaltetem Gerät durch Gedrückthalten der Schnellstarttaste (TR) für eine voreingestellte Zeitdauer erfolgt, sodass das Programm, das während des Haltens der Taste ausgeführt wird, der Schnellstarttaste (TR) zugeordnet wird.

4. Haushaltsgerät, das zur Kategorie der weißen Ware gehört, wobei das Haushaltsgerät, das zur Kategorie der weißen Ware gehört, eine Waschmaschine oder eine Wasch-/Trockenmaschine oder ein Geschirrspüler oder ein Ofen ist und eine Schnellstarttaste (TR), eine Taste (ON/OFF) zum normalen Ein-/Ausschalten des Geräts, Mittel (SP) zum Auswählen eines Betriebsprogramms und Mittel zum Umsetzen des Verfahrens nach einem der vorhergehenden Ansprüche umfasst.

5. Haushaltsgerät, das zu Kategorie der weißen Ware gehört, nach Anspruch 4, wobei die Taste (ON/OFF) zum normalen Ein-/Ausschalten des Geräts und die Mittel (SP) zum Auswählen eines Betriebsprogramms auf dem Gerät entlang einer ersten horizontalen geraden Linie (K) angeordnet sind und die Schnellstarttaste (TR) auf dem Gerät in einer Bestimmten Entfernung von der ersten horizontalen geraden Linie angeordnet ist.

6. Haushaltsgerät, das zur Kategorie der weißen Ware gehört, nach Anspruch 4 oder 5, wobei die Schnellstarttaste (TR) eines oder mehrere der folgenden Merkmale aufweist:
- sie ist vom mechanischen oder Berührungstyp;
- sie ist hintergrundbeleuchtet;
- es befindet sich ein Erkennungssymbol auf ihr;
- sie ist nach innen konkav.

## Revendications

1. Procédé pour allumer et activer rapidement un appareil électroménager appartenant aux produits blancs, ledit appareil électroménager appartenant aux produits blancs étant une machine à laver ou un lave-linge séchant ou un lave-vaisselle ou un four, caractérisé comme comprenant les étapes de :
- présence d'un bouton de démarrage rapide (TR) sur l'appareil, ledit bouton de démarrage rapide (TR), quand il est activé l'appareil étant à l'arrêt, permettant à l'appareil de démarrer différentes fonctions initiales, comme l'allumage de l'appareil et la sélection et l'activation d'un programme de travail prédéterminé ;
- pression seulement sur ledit bouton de démarrage rapide (TR) pour allumer l'appareil et activer un programme de travail prédéterminé,
dans lequel ledit appareil électroménager blanc appartenant aux produits blancs comprend un bouton (MARCHE / ARRÊT) pour normalement allumer / éteindre l'appareil et un moyen (SP) pour sélectionner un programme de travail, ledit procédé comprenant l'étape de désactivation dudit bouton de démarrage rapide (TR) lors de la mise en oeuvre dudit bouton marche/arrêt normal (MARCHE/ARRÊT) et dudit moyen (SP) pour sélectionner un programme de travail.

2. Procédé selon la revendication 1, dans lequel ledit programme de travail prédéterminé est déterminé selon l'une des étapes suivantes :
- préréglage dudit programme de travail prédéterminé en fabriquant l'appareil électroménager blanc ; ou
- stockage d'un programme de travail exécuté par l'appareil électroménager blanc lors de son extinction, et l'activation dudit programme en tant que programme de travail prédéterminé lorsque ledit bouton de démarrage rapide est de nouveau pressé ; ou
- stockage du nombre total de survenances pour chaque programme exécuté par l'appareil, détermination de quel programme avait le plus grand nombre de survenances en arrêtant l'appareil, et activation dudit programme lorsque le bouton de démarrage rapide est de nouveau pressé ; ou
- préréglage dudit programme selon le choix de l'utilisateur.

3. Procédé selon la revendication 2, dans lequel, si ledit programme de travail prédéterminé est déterminé par le choix de l'utilisateur, ladite détermination se produit l'appareil étant allumé en maintenant ledit bouton de démarrage rapide (TR) pressé pendant un temps prédéterminé, de sorte que le programme est exécuté tout en maintenant le bouton sera associé audit bouton de démarrage rapide (TR).

4. Appareil électroménager appartenant aux produits blancs, ledit appareil électroménager appartenant aux produits blancs étant une machine à laver ou un lave-linge séchant ou un lave-vaisselle ou un four et un comprenant un bouton de démarrage rapide (TR), un bouton (MARCHE/ARRÊT) pour normalement allumer/éteindre l'appareil, un moyen (SP) pour sélectionner un programme de travail et un moyen pour mettre en oeuvre le procédé selon l'une quelconque des revendications précédentes.

5. Appareil électroménager appartenant aux produits blancs selon la revendication 4, dans lequel ledit bouton (MARCHE/ARRÊT) pour normalement allumer/éteindre l'appareil et ledit moyen (SP) pour sélectionner un programme de travail sont agencés sur ledit appareil le long d'une première ligne droite horizontale (K), et ledit bouton de démarrage rapide (TR) est agencé sur ledit appareil à une certaine distance de ladite première ligne droite horizontale.

6. Appareil électroménager appartenant aux produits blancs selon les revendications 4 ou 5, dans lequel ledit bouton de démarrage rapide (TR) comprend une ou plusieurs des particularités suivantes :
- il est du type mécanique ou tactile ;
- il est rétroéclairé ;
- il y a une icône d'identification sur ce dernier ;
- il est concave vers l'intérieur.
